# EUROPEAN PATENT SPECIFICATION

(11) **EP 3 125 728 B1**
(45) Date of publication and mention of the grant of the patent: **12.06.2019**
(21) Application number: 15708774.3
(22) Date of filing: 26.02.2015
(51) Int. Cl.: A47J 31/06, A47J 31/52

(54) **A HOT BEVERAGE PREPARATION MACHINE COMPRISING A TEMPERATURE SENSOR**
HEISSGETRÄNKZUBEREITUNGSMASCHINE MIT EINEM TEMPERATURSENSOR
MACHINE DE PRÉPARATION DE BOISSON CHAUDE COMPRENANT UN CAPTEUR DE TEMPÉRATURE

(30) Priority: 01.04.2014 TR 201403767
(43) Date of publication of application: 08.02.2017
(73) Proprietor: Arçelik Anonim Sirketi, 34950 Istanbul (TR)
(72) Inventor: KUYUMCU, Yusuf, 34950 Istanbul (TR); HATIPOGLU, Oner, 34950 Istanbul (TR); OZTURK, Erkan, 34950 Istanbul (TR)
(86) International application number: PCT/EP2015/053967
(87) International publication number: WO 2015/149999

(56) References cited:
- WO-A1-2007/090391
- CN-U- 203 468 335
- US-A- 4 917 005
- US-A1- 2003 126 993
- US-A1- 2006 005 712

## Description

The present invention relates to a hot beverage preparation machine comprising a temperature sensor.

In hot beverage preparation machines, the water filled into the water container is heated by a water heater and is transferred to the brewing chamber containing raw beverage material to be prepared. The brewing process is performed in the brewing chamber as a result of the interaction between the raw beverage material and water. The brewed beverage is afterwards transferred into a pot and served. The time duration the raw beverage material interacts with the water is one of the important parameters that defines the brew strength, hence the taste of the beverage. Therefore, the brewed beverage must be transferred into the pot in a continuous and error-free manner during the brewing process. The brewing process being continuously carried out is also important for the operational precision of the time adjustable hot beverage preparation machines.

In the state of the art International Patent Application No. WO2008049163, a tea maker is disclosed, wherein the pulp of the used beverage material is removed from the brewing chamber.

United States Patent US 4 917 005 describes a coffee maker comprising a water container with a heater. When fresh water is supplied via a valve to the bottom of the container, heated water is transferred from the top of the container into a brewer funnel from where it passes on into a pot. A temperature sensor is provided in the water container for controlling the operation of the heater. Moreover, a timer which controls the supply of fresh water can be blocked if the water in the container is insufficiently heated.

The aim of the present invention is the realization of a hot beverage preparation machine that gives an alert in case of an error during the hot beverage preparation process steps.

The hot beverage preparation machine realized in order to attain the aim of the present invention and explicated in the claims, comprises a water container wherein the brewing water is heated, a brewing chamber wherein the brewing process is performed as a result of the interaction between the raw beverage material and water, a pot that is situated under the brewing chamber so as to allow the brewed beverage to be distilled therein, and a valve that is disposed between the brewing chamber and the pot and that enables the beverage to be distilled from the brewing chamber into the pot. When the brewing process is completed, the hot beverage is distilled from the brewing chamber to the pot and separated from the raw beverage material.

The hot beverage preparation machine of the present invention comprises a temperature sensor that is disposed on the valve through which the hot beverage, for instance tea, is transferred from the brewing chamber into the pot and that measures the temperature of the brewed beverage, and a control unit that determines whether there is an error in the hot beverage preparation process steps according to the temperature values measured by the temperature sensor.

In an embodiment of the present invention, the control unit detects that the water is started to be transferred from the brewing chamber into the pot when the temperature value measured by the temperature sensor starts to increased, and closes the valve when the temperature starts to decrease. Thus, malfunctions such as the valve remaining open in an uncontrollable manner can be detected.

In an embodiment of the present invention, the control unit gives an error alert for the heater if the temperature value measured by the temperature sensor is outside the predetermined temperature value range. Thus, the temperature of the beverage can be monitored and additional heating can be performed if necessary.

In an embodiment of the present invention, the control unit detects that the temperature value measured by the temperature sensor starts to increase before a hot beverage preparation time, that is predetermined by the producer or the user and that comprises the time of heating water, the time of transferring water into the brewing chamber and the time of brewing, expires, and gives an error alert for the brewing process.

In an embodiment of the present invention, the control unit detects that the water is started to be transferred from the brewing chamber into the pot when the temperature value measured by the temperature sensor starts to increase, and gives an error alert for the temperature sensor if there is no increase in the temperature value measured at the end of the hot beverage preparation time.

The hot beverage preparation machine realized in order to attain the aim of the present invention is illustrated in the attached figures, where:

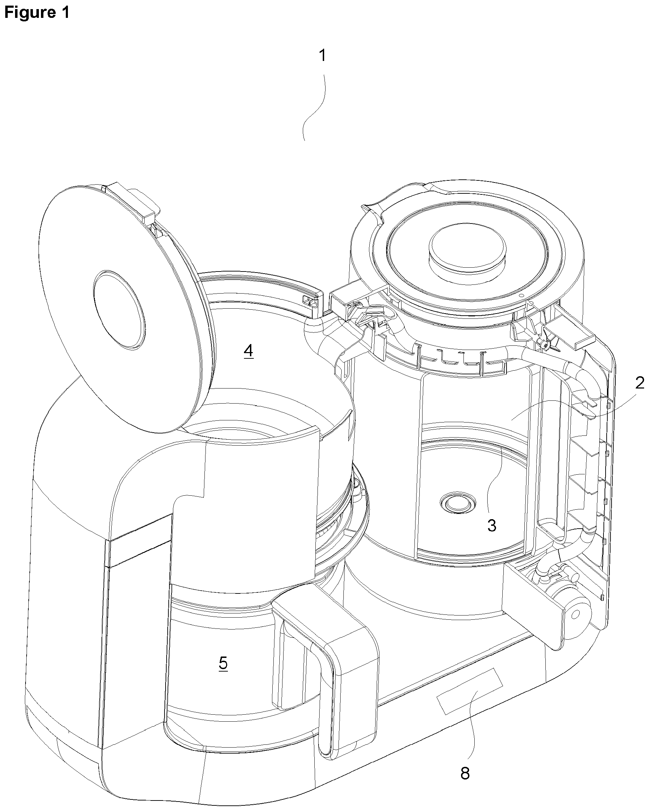

Figure 1 - is the perspective view of a hot beverage preparation machine.

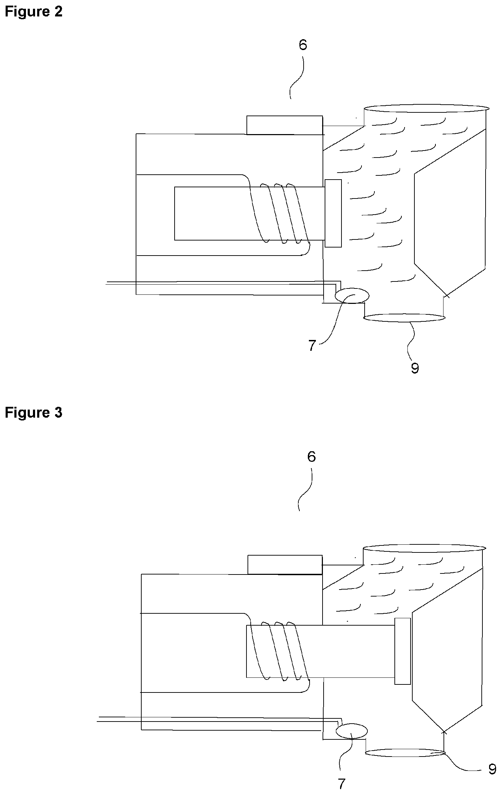

Figure 2 - is the perspective view of a valve when it is open.
Figure 3 - is the perspective view of a valve when it is closed.

The following symbols are used for explicating the hot beverage preparation machine of the present invention:
- tₚ : A hot beverage preparation time that is predetermined by the producer or the user and that comprises the time of heating water, the time of transferring water into the brewing chamber and the time of brewing
- Tₘ : Temperature value measured by the temperature sensor
- Tᵣ: Temperature value range predetermined by the producer or the user

The elements illustrated in the figures are numbered as follows:
1. Hot beverage preparation machine
2. Water container
3. Heater
4. Brewing chamber
5. Pot
6. Valve
7. Temperature sensor
8. Control unit
9. Outlet port

The hot beverage preparation machine (1) comprises a water container (2) wherein water is filled, a heater (3) that enables the water inside the water container (2) to be heated, a brewing chamber (4) wherein the raw material of the beverage to be prepared is placed and whereto the water heated in the water container (2) is transferred, and wherein the brewing process is performed as a result of the interaction between the raw beverage material and water, a pot (5) with the upper surface thereof being at least partially open, that is disposed under the brewing chamber (4) and whereto the beverage brewed in the brewing chamber (4) is transferred, and a valve (6) that is disposed over the brewing chamber (4) and that enables the brewed beverage to be transferred into the pot (5).

The hot beverage preparation machine (1) of the present invention comprises a temperature sensor (7) that is disposed on the valve (6) and measures the temperature of the beverage, and a control unit (8) that determines whether the hot beverage preparation machine (1) operates in line with the operational conditions predetermined by the producer according to the temperature value (Tₘ) measured by the temperature sensor (7) and that gives an error alert if necessary. By means of the temperature sensor (7) disposed on the valve (6), the temperature value (Tₘ) measured increases as the hot beverage starts to be transferred from the brewing chamber (4) into the pot (5), the temperature value (Tₘ) measured remains constant so as to be almost equal to the temperature of the hot beverage during the transfer and the temperature value (Tₘ) measured starts to decrease when the transfer is completed. The control unit (8) determines whether there is any error in the hot beverage preparation process steps according to the results of the measurements performed by the temperature sensor (7).

In an embodiment of the present invention, the control unit (8) detects that the water is started to be transferred from the brewing chamber (4) into the pot (5) when the temperature value (Tₘ) measured by the temperature sensor (7) starts to increase, and closes the valve (6) when the temperature (Tₘ) starts to decrease. Thus, the valve (6) is closed after the completion of the brewed beverage transfer, providing energy savings. The lifespan of the valve (6) is increased by keeping the valve (6) open only as needed.

In an embodiment of the present invention, the control unit (8) gives an error alert for the heater (3) if the temperature value (Tₘ) measured by the temperature sensor (7) is outside the temperature value range (Tᵣ) predetermined by the producer or the user. By warning the user by means of an alert, the user is prevented from drinking an insufficiently brewed cold beverage. The control unit (8) performs additional heating if necessary.

In an embodiment of the present invention, the control unit (8) detects that the temperature value (Tₘ) measured by the temperature sensor (7) starts to increase before a hot beverage preparation time (tₚ), that is predetermined by the producer or the user and that comprises the time of heating water, the time of transferring water into the brewing chamber (4) and the time of brewing, expires, and gives an error alert for the brewing process. Thus, if the valve (6) is opened before the completion of the brewing process, the user is allowed to start the hot beverage preparation process again since the user is warned.

In an embodiment of the present invention, the control unit (8) detects that the water is started to be transferred from the brewing chamber (4) into the pot (5) when the temperature value (Tₘ) measured by the temperature sensor (7) starts to increase, and gives an error alert for the temperature sensor (7) if there is no increase in the temperature value (Tₘ) measured at the end of the hot beverage preparation time (tₚ).

In an embodiment of the present invention, the hot beverage preparation machine (1) comprises an outlet port (9) that is arranged on the valve (6) and that opens into the pot (5), and the temperature sensor (7) is disposed on the outlet port (9).

In an embodiment of the present invention, the temperature sensor (7) is a NTC or PTC sensor.

By means of the present invention, the control unit (8) enables the user to be warned if there is any interruption in the hot beverage preparation process steps. The control unit (8) monitors the operating condition of the heater (3) and/or the valve (6) according to the results of the measurements carried out by the temperature sensor (7) disposed on the valve (6). Thus, the valve (6) is prevented from being kept open in an uncontrollable manner and additional heating is performed if the heater (3) does not operate or the operation time is insufficient.

## Claims

1. A hot beverage preparation machine (1) comprising
- a water container (2) wherein water is filled,
- a heater (3) enabling the water inside the water container (2) to be heated,
- a brewing chamber (4) wherein the raw material of the beverage to be prepared is placed and whereto the water heated in the water container (2) is transferred, and wherein the brewing process is performed as a result of the interaction between the raw beverage material and water,
- a pot (5) with the upper surface thereof being at least partially open, that is disposed under the brewing chamber (4) and whereto the beverage brewed in the brewing chamber (4) is transferred, and
**characterized by**
- a valve (6) that is disposed between the brewing chamber (4) and the pot (5) and that enables the brewed beverage to be transferred into the pot (5),
- a temperature sensor (7) that is disposed on the valve (6) and that measures the temperature of the brewed beverage and
- a control unit (8) that determines whether the hot beverage preparation machine (1) operates in line with the operating conditions predetermined by the producer according to the temperature value (Tm) measured by the temperature sensor (7) and that produces an error alert if necessary.

2. A hot beverage preparation machine (1) as in Claim 1, **characterized by** the control unit (8) that detects that the water is started to be transferred from the brewing chamber (4) into the pot (5) when the temperature value (Tm) measured by the temperature sensor (7) starts to increase, and closes the valve (6) when the temperature (Tm) starts to decrease.

3. A hot beverage preparation machine (1) as in Claim 1 or Claim 2, **characterized by** the control unit (8) that produces an error alert for the heater (3) if the temperature value (Tm) measured by the temperature sensor (7) is outside the temperature value range (Tr) predetermined by the producer or the user.

4. A hot beverage preparation machine (1) as in any one of the above claims, **characterized by** the control unit (8) that detects that the temperature value (Tm) measured by the temperature sensor (7) starts to increase before a hot beverage preparation time (tp), that is predetermined by the producer or the user and that comprises the time of heating water, the time of transferring water into the brewing chamber (4) and the time of brewing, expires, and produces an error alert for the brewing process.

5. A hot beverage preparation machine (1) as in Claim 1 or Claim 2, **characterized by** the control unit (8) that gives an error alert for the temperature sensor (7) if there is no increase in the temperature value (Tm) measured at the end of the hot beverage preparation time (tp).

6. A hot beverage preparation machine (1) as in any one of the above claims, **characterized by** an outlet port (9) that is arranged on the valve (6) and that opens into the pot (5), and by the temperature sensor (7) that is disposed on the outlet port (9).

7. A hot beverage preparation machine (1) as in any one of the above claims, **characterized by** the temperature sensor (7) that is an NTC or PTC.

## Patentansprüche

1. Eine Heißgetränkezubereitungsmaschine (1) umfasst
- einen Wasserbehälter (2), worin das Wassere gefüllt ist,
- eine Heizanlage (3) zum erhitzen des Wassers in dem Wasserbehälter (2),
- eine Brühkammer (4), worin das Rohmaterial des zuzubereitenden Getränks eingefüllt ist und in die das im Wasserbehälter (2) erhitzte Wasser überführt wird, wobei der Brühvorgang als Ergebnis der Wechselwirkung zwischen dem Rohgetränkmaterial und Wasser durchgeführt wird,
- ein Pott (5), dessen obere Oberfläche mindestens zum Teil geöffnet ist, der unter der Brühkammer (4) angeordnet ist und in den das aus der Brühkammer (4) gebrühte Getränk überführt wird, und
**gekennzeichnet wird es durch,**
- ein Ventil (6), welches zwischen der Brühkammer (4) und dem Pott (5) angeordnet ist und es ermöglicht, das gebrühte Getränk in den Pott (5) zu überführen,
- einen Temperatursensor (7), der an dem Ventil (6) angeordnet ist und die Temperatur des gebrühten Getränks misst
- eine Steuereinheit (8), die es bestimmt, ob die Heißgetränkezubereitungsmaschine (1) nach den vom Hersteller vorgegebenen Betriebsbedingungen gemäß dem vom Temperatursensor (7) gemessenen Temperaturwert (Tm) arbeitet, und bei Erforderlichkeit einen Fehleralarm erzeugt.

2. Eine Heißgetränkezubereitungsmaschine (1), wie in Anspruch 1 aufgeführt, **ist dadurch gekennzeichnet, dass** die Steuereinheit (8) es erfasst, dass die Überführung des Wasser aus der Brühkammer (4) in den Pott (5) begonnen hat, wenn der Temperaturwert (Tm),der von dem Temperatursensor (7) gemessen wird, anfängt zu steigen und schließt das Ventil (6), wenn die Temperatur (TM) anfängt zu sinken.

3. Eine Heißgetränkezubereitungsmaschine (1), wie in Anspruch 1 oder 2 aufgeführt, **ist dadurch gekennzeichnet, dass** die Steuereinheit (8) einen Fehlalarm für die Heizanlage (3) erzeugt, wenn der vom Temperatursensor (7) gemessene Temperaturwert (Tm) außerhalb des vom Hersteller oder Benutzer vorgegebenen Temperaturwertbereichs (Tr) liegt.

4. Eine Heißgetränkezubereitungsmaschine (1), wie in den vorherigen Ansprüchen aufgeführt, **ist dadurch gekennzeichnet, dass** die Steuereinheit (8) es erfasst, dass der vom Temperatursensor (7) gemessene Temperaturwert (Tm) vor einer Heißgetränkezubereitung zu steigen beginnt, wenn die vom Hersteller oder Benutzer voreingestellt Zeit (tp), welche die Zeit des Erhitzten Wassers, die Zeit der Überführung des Wassers in die Brühkammer (4) und die Zeit des Brühens umfasst, abläuft und erzeugt einen Fehleralarm für den Brauprozess.

5. Eine Heißgetränkezubereitungsmaschine (1), wie in Anspruch 1 oder 2 aufgeführt, **ist dadurch gekennzeichnet, dass** die Steuereinheit (8) einen Fehlalarm für den Temperatursensor (7) erzeugt, wenn der gemessene Temperaturwert (Tm) am Ende der Zubereitungszeit für das Heißgetränk nicht ansteigt.

6. Eine Heißgetränkezubereitungsmaschine (1), wie in den vorherigen Ansprüchen aufgeführt, **ist dadurch gekennzeichnet, dass** eine Auslassöffnung (9), welches an dem Ventil (6) angeordnet ist und in den Pott (5) einfließt; und durch den Temperatursensor (7), die an der Auslassöffnung (9) angeordnet ist.

7. Eine Heißgetränkezubereitungsmaschine (1), wie in den vorherigen Ansprüchen aufgeführt, **ist dadurch gekennzeichnet, dass** der Temperatursensor (7) ein NTC oder PTC ist.

## Revendications

1. Une machine de préparation de boissons chaudes (1) comprenant
- un réservoir d'eau (2) dans lequel de l'eau est remplie,
- un dispositif de chauffage (3) permettant de chauffer l'eau à l'intérieur du réservoir d'eau (2),
- une chambre de percolation (4) dans laquelle la matière première de la boisson à préparer est placée et dans laquelle l'eau chauffée dans le réservoir d'eau (2) est transférée, et dans laquelle le processus de percolation est effectué par l'interaction entre la matière première de la boisson et l'eau,
- un pot (5) dont la surface supérieure est au moins partiellement ouverte, qui est disposé sous la chambre de percolation (4) et dans lequel la boisson brassée dans la chambre de percolation (4) est transférée, et
**est caractérisé en ce que**
- une soupape (6) qui est disposée entre la chambre de percolation (4) et le pot (5) et qui permet de transférer la boisson brassée dans le pot (5),
- un capteur de température (7) qui est disposé sur la soupape (6) et qui mesure la température de la boisson brassée et
- une unité de commande (8) qui détermine si la machine de préparation de boissons chaudes (1) fonctionne conformément aux conditions de fonctionnement prédéterminées par le producteur en fonction de la valeur de température (Tm) mesurée par le capteur de température (7) et qui produit si nécessaire une alerte de défaut.

2. Une machine de préparation de boissons chaudes (1) selon la déclaration 1, **est caractérisée par** l'unité de commande (8) qui détecte que l'eau commence à être transférée de la chambre de brassage (4) dans le pot (5) lorsque la température (Tm) mesurée par le capteur (7) de température augmente, et ferme la soupape (6) lorsque la température (Tm) commence à diminuer.

3. Une machine de préparation de boissons chaudes (1) selon la déclaration 1 ou la déclaration 2, **est caractérisée par** l'unité de commande (8) qui produit une alerte d'erreur pour le chauffage (3) si la valeur de température (Tm) mesurée par le capteur de température (7) est hors de la plage (Tr) prédéterminée par le producteur ou l'utilisateur.

4. Une machine de préparation de boissons chaudes (1) comme dans l'une quelconque des déclarations ci-dessus, **est caractérisée par** l'unité de commande (8) qui détecte que la valeur de température (Tm) mesurée par le capteur de température (7) commence à augmenter avant un temps (tp) prédéterminé par le producteur ou l'utilisateur, qui comprend le moment du chauffage d'eau, le moment du transfert d'eau dans la chambre (4) et celui de brassage, de fin et produit une alerte de défaut pendant le procédé de brassage.

5. Une machine de préparation de boissons chaudes (1) selon la déclaration 1 ou la déclaration 2, **est caractérisée par** l'unité de commande (8) qui émet une alerte d'erreur pour le capteur de température (7) si la valeur de température (Tm) mesurée à la fin du temps de préparation de boisson chaude (tp) ne présente pas d'augmentation.

6. Une machine de préparation de boissons chaudes (1) comme dans l'une quelconque des déclarations ci-dessus, **est caractérisée par** un orifice de sortie (9) qui est disposé sur la soupape (6) et qui s'ouvre dans le pot (5), et par le capteur de température (7) qui est disposé sur l'orifice de sortie (9).

7. Une machine de préparation de boissons chaudes (1) comme dans l'une quelconque des déclarations ci-dessus, **est caractérisée par** la sonde de température (7) qui est un NTC ou un PTC.
